# EUROPÄISCHE PATENTSCHRIFT

(11) **EP 3 164 526 B1**
(45) Veröffentlichungstag und Bekanntmachung des Hinweises auf die Patenterteilung: **26.09.2018**
(21) Anmeldenummer: 15750619.7
(22) Anmeldetag: 30.06.2015
(51) Int. Cl.: C23C 24/04, B05B 7/00, B05B 7/14, B05B 7/16

(54) **VERFAHREN ZUR HERSTELLUNG EINER SCHICHT**
METHOD FOR PRODUCING A LAYER
PROCÉDÉ DE FABRICATION D'UNE COUCHE

(30) Priorität: 03.07.2014 AT 2732014 U
(43) Veröffentlichungstag der Anmeldung: 10.05.2017
(73) Patentinhaber: Plansee SE, 6600 Reutte (AT)
(72) Erfinder: O'SULLIVAN, Michael, A-6600 Ehenbichl (AT); KATHREIN, Martin, Tehuacan, PUEBLA CP 75760 (MX); LEICHTFRIED, Gerhard, A-6600 Reutte (AT); HOSP, Thomas, A-6622 Berwang (AT); LANG, Bernhard, A-6651 Häselgehr (AT); SPRENGER, Dietmar, 6610 Wängle (AT)
(74) Vertreter: Ciesla, Bettina
(86) Internationale Anmeldenummer: PCT/AT2015/000092
(87) Internationale Veröffentlichungsnummer: WO 2016/000004

(56) Entgegenhaltungen:
- EP-A1- 2 009 132
- EP-A1- 2 620 525
- WO-A2-2006/117145
- CN-B- 102 363 852
- US-A1- 2006 090 593
- US-A1- 2008 271 779
- KANG H-K ET AL: "Tungsten/copper composite deposits produced by a cold spray", SCRIPTA MATERIALIA, ELSEVIER, AMSTERDAM, NL, Bd. 49, Nr. 12, 1. Dezember 2003 (2003-12-01), Seiten 1169-1174, XP004458702, ISSN: 1359-6462, DOI: 10.1016/J.SCRIPTAMAT.2003.08.023
- Ramin Ghelichi ET AL: "Coating by the Cold Spray Process: a state of the art", DOI: 10.3221/IGF-ESIS.08, 1. Januar 2009 (2009-01-01), Seiten 30-4403, XP055222876, DOI: 10.3221/IGF-ESIS.08.03 Gefunden im Internet: URL:http://www.gruppofrattura.it/pdf/rivis ta/numero8/numero_8_art_3.pdf

## Beschreibung

Die Erfindung betrifft ein Verfahren zur Herstellung einer Schicht auf einem Substratkörper oder eines aus Schichtlagen aufgebauten Körpers, wobei ein aus Partikeln gebildeter Beschichtungsstoff aus Molybdän (Mo), Wolfram (W), einer Mo-Basislegierung oder einer W-Basislegierung sowie ein Prozessgas, das einen Druck von > 10 bar aufweist, bereitgestellt werden, das Prozessgas in einer Konvergent-Divergent-Düse beschleunigt und der Beschichtungsstoff vor, in oder nach der Konvergent-Divergent-Düse in das Prozessgas injiziert wird nach Anspruch 1.

Beschichtungsverfahren, bei denen Pulverpartikel mit sehr hoher kinetischer und geringer thermischer Energie auf ein Trägermaterial aufgebracht werden, werden unter dem Begriff Kaltgasspritzen (cold gas spraying, abgekürzt CGS) subsumiert. Die Kaltgasspritztechnologie ist beispielsweise in der EP 484 533 A1 beschrieben. Ein unter hohem Druck stehendes Prozessgas (beispielsweise Luft, He, N₂ oder Mischungen daraus) wird mittels einer Konvergent-Divergent-Düse (auch als Überschalldüse bezeichnet) entspannt. Eine typische Düsenform stellt dabei die Laval-Düse (oder auch De-Laval-Düse genannt) dar. Je nach verwendetem Prozessgas sind Gasgeschwindigkeiten von beispielsweise 900 m/s (bei N₂) bis 2.500 m/s (bei He) erreichbar. Der Beschichtungsstoff wird dabei beispielsweise vor dem engsten Querschnitt der Konvergent-Divergent-Düse, die einen Teil der Spritzpistole bildet, in den Gasstrom injiziert, typischerweise auf eine Geschwindigkeit von 300 bis 1.200 m/s beschleunigt und auf einem Substrat abgeschieden.

Ein Aufheizen des Gases vor der Konvergent-Divergent-Düse erhöht bei der Expansion des Gases in der Düse die Strömungsgeschwindigkeit des Gases und somit auch die Partikelgeschwindigkeit. In der EP 924 315 A1 ist ein Verfahren beschrieben, bei welchem das Gas bereits direkt nach dem Verlassen des Gaspuffers in einem Heizer erwärmt und das erwärmte Gas zur Spritzpistole geleitet wird. Die DE 102005004117 A1 beschreibt ein CGS Verfahren, bei welchem das Gas nach dem Gaspuffer und an der Spritzpistole erwärmt wird. Typischerweise kommt beim Kaltgasspritzen eine Gastemperatur von Raumtemperatur bis 600°C zur Anwendung, um einen Hauptvorteil des CGS, nämlich die geringe Reaktion mit Gasen, zu nützen.

Ferner beschreibt die US2008/271779A1 als auch die WO2006/117145 die Herstellung von Sputtertargets, aus Molybdän und Wolfram, über Kaltgasspritzen. Die US2006/090593 beschreibt die Beschichtung eines Werkstücks über Kaltgasspritzen durch Verwendung eines beschichteten Ausgangspulvers. Die EP2009132A1 offenbart ein Verfahren zur Herstellung einer funktionalen Schicht, aus einem schäumbaren Beschichtungsmaterial auf einem Substrat. Die EP2620525A1 offenbart ein Verfahren zum Kaltgasspritzen, wobei die Spritzpartikel teilweise aus nanokristallinen Agglomeraten bestehen, welche eine Oberfläche von 200 bis 800 m²/g aufweisen. Die CN102363 852 offenbart die Herstellung von W/Cu-Schichten mittels Kaltgasspritzen.

Durch CGS lassen sich insbesondere duktile Werkstoffe mit kubisch flächenzentriertem und hexagonal dichtest gepacktem Gitter zu dichten, gut haftenden Schichten verspritzen. Der Schichtaufbau erfolgt dabei lagenweise aus den einzelnen Partikeln des Beschichtungsstoffes. Für die Qualität einer CGS Schicht sind die Adhäsion des Beschichtungsstoffs zum Substratwerkstoff und die Kohäsion zwischen den Partikeln des Beschichtungsstoffs entscheidend. Grundsätzlich ist die Haftung sowohl im Bereich der Grenzfläche Beschichtungsstoff / Substrat als auch zwischen den Partikeln des Beschichtungsstoffs ein Zusammenspiel mehrerer physikalischer und chemischer Haftmechanismen und zum Teil noch nicht umfassend verstanden.

Die folgenden Mechanismen werden in der Literatur diskutiert. In einem Modell wird dabei die Haftung mit mechanischen Verzahnungseffekten aufgrund von Grenzflächeninstabilitäten durch unterschiedliche Viskositäten und daraus resultierenden Grenzflächenaufstülpungen und Verwirbelungen erklärt. Ein weiteres Modell geht davon aus, dass erst durch das Auftreffen weiterer Partikel auf einem bereits haftenden Partikel Bedingungen für eine hohe Grenzflächenfestigkeit geschaffen werden. Ein drittes Modell geht davon aus, dass die zuerst auf dem Substrat auftreffenden Partikel durch Van-der-Waals-Kräfte auf der Oberfläche haften und eine starke Adhäsion erst durch weitere Partikel erzielbar ist, die auf den zuvor abgeschiedenen Partikeln auftreffen. Eine weitere Theorie führt Haftung auf topochemische Reaktionen zurück. Haftung wird auch mit an der Grenzfläche auftretenden adiabatischen Scherinstabilitäten erklärt. Dazu ist es erforderlich, dass die Partikel beim Auftreffen eine kritische Geschwindigkeit überschreiten. Beim Auftreten von adiabatischen Scherinstabilitäten ist Verformung und die daraus resultierende Erwärmung auf nur kleine Bereiche konzentriert, während umgebende Bereiche nicht erwärmt und auch deutlich weniger verformt werden. Auch ein Einfluss der Gitterorientierung, bzw. der Beziehung der Gitterorientierungen zweier benachbarter Körnern, wird diskutiert.

Wichtige Anforderungen an eine Schicht, wie beispielsweise Schichthaftung, geringe Porosität, hohe Korngrenzenfestigkeit und Schichtduktilität, werden von unterschiedlichen Beschichtungsstoffen in unterschiedlichem Maß erfüllt. Dabei herrscht in der Literatur die einheitliche Meinung, dass die spröden, kubisch raumzentrierten Werkstoffe Molybdän und Wolfram ein besonders ungünstiges Eigenschaftsprofil aufweisen, um sich durch einen Kaltgasspritzprozess zu gut haftenden, dichten Schichten abscheiden zu lassen.

Dazu beschreibt die CN 102615288 A die Herstellung von einem gut rieselfähigen Molybdän-Beschichtungsstoff durch die Schritte Mahlen von Mo-Pulver unter Zugabe von de-ionisiertem Wasser, Polyethylenglycol und Polyvinylalkohol, gefolgt von Zentrifugal-Sprühgranulieren, Sintern bei hohen Temperaturen und abschließendem Zerkleinern der gesinterten Partikel. Die CN 102615288 A beschreibt, dass damit ein annähernd kugeliges, dichtes und gut rieselfähiges Molybdän-Pulver erhalten wird. Mit einem Pulver gemäß dieser Anmeldung können zwar Verstopfungen im Fördersystem vermieden, jedoch nicht gut haftende, dicke und dichte Schichten abgeschieden werden.

Die CN 102363852 A beschreibt eine W-Cu Schicht, die durch CGS mit einem Gasdruck von 2,5 bis 3 MPa und einer Gastemperatur von 400 bis 600°C abgeschieden worden ist. Eine gute Haftfestigkeit zwischen Teilchen und Substrat bzw. Kohäsion zwischen den Teilchen untereinander wird durch eine Kupferbeschichtung der Wolframpartikel erreicht.

Auch die CN 102286740 A beschreibt ein Verfahren zur Herstellung einer Mo-Cu oder W-Cu CGS Schicht mit einem hohen Cu Gehalt, wobei die Prozessgastemperatur 100 bis 600°C beträgt.

Die CN 102260869 A wiederum offenbart eine auf einem Cu- oder Stahlsubstrat abgeschiedene W-Schicht. Bei Verwendung von Helium als Prozessgas betrug die Gasanwärmtemperatur 200 bis 500°C, bei N₂ 500 bis 800°C. Obwohl sehr hohe Gasdrücke von 20 bis 50 bar und vergleichsweise weiche Substratwerkstoffe wie Kupfer- und austenitische Stähle zur Anwendung kamen, bei denen es zu einem günstigen Verzahnungsverhalten zwischen Beschichtungswerkstoff und Substrat kommt, wurde nur eine mittlere Schichtdicke von < 10 µm erzielt. Eine mittlere Schichtdicke von < 10 µm ist ein deutlicher Hinweis darauf, dass nur eine Schichtlage aufgebaut werden konnte. Der Aufbau der ersten Schichtlage hängt nur von der Wechselwirkung zwischen Beschichtungsstoff und Substrat ab. Günstige Substrateigenschaften können damit ungünstige Eigenschaften des Beschichtungsstoffs kompensieren.

Eine kaltgasgespritzte Mo- bzw. W-Schicht in einer Aufzählung mit Nb, Ta, Cr, Ti, Zr, Ni, Co, Fe, Al, Ag, Cu oder Legierungen daraus mit einem O-Gehalt < 500 ppm und einem H-Gehalt < 500 ppm geht aus der
WO 2008/057710 A2 hervor. Als Gastemperatur für die Beispiele mit Ta, Nb und Ni wird 600°C offenbart. Ta, Nb und Ni sind sehr weiche und duktile Werkstoffe, die sich gut mit CGS zu Schichten abscheiden lassen. Aus den Beispielen gehen keine Versuchsergebnisse für die Werkstoffe Mo, Cr, Ti, Zr, Ni, Co, Fe, Al, Ag und Cu hervor.

Es ist daher Aufgabe der vorliegenden Erfindung, ein Verfahren bereitzustellen, mit dem sich prozesssicher und kostengünstig CGS Schichten aus Mo, W, einer Mo-Basislegierung oder einer W-Basislegierung herstellen lassen. Kostengünstig kann beispielsweise implizieren, dass auf die Verwendung von He als Prozessgas verzichtet werden kann, da He ein großer Kostentreiber beim Kaltgasspritzen ist. Im Weiteren ist es Aufgabe der vorliegenden Erfindung, ein Verfahren bereitzustellen, das zu Schichten führt, die eine gute Schichthaftung, eine hohe Dichte, geringe innere Spannungen, eine ausreichende Schichtdicke und eine geringe Fehlstellendichte, wie zum Beispiel Mikrorisse zwischen den einzelnen Schichtlagen, aufweisen. Zudem ist es Aufgabe der Erfindung eine CGS Schicht mit den zuvor genannten Eigenschaften bereit zu stellen.

Im Weiteren ist es Aufgabe der Erfindung, ein Verfahren bereitzustellen mit dem sich prozesssicher und kostengünstig ein Körper aus Mo, W, einer Mo-Basislegierung oder einer W-Basislegierung herstellen lässt, der aus einer Vielzahl von Schichtlagen aufgebaut ist, eine hohe Dichte, geringe innere Spannungen und eine geringe Fehlstellendichte wie zum Beispiel Mikrorisse zwischen den einzelnen Schichtlagen aufweist.

Die Aufgabe wird durch die unabhängigen Ansprüche gelöst. Besondere Ausgestaltungsformen sind in den abhängigen Ansprüchen ausgeführt.

Das Verfahren dient dabei der Abscheidung einer Schicht auf einem Substratkörper. Die Schicht kann dabei aus einer Schichtlage oder aus mehreren Schichtlagen aufgebaut sein. Mit dem Verfahren lässt sich jedoch auch ein aus einer Vielzahl von Schichtlagen aufgebauter Körper herstellen, der bevorzugt selbsttragend ist. Dazu wird eine Vielzahl von Schichten auf einem Substrat abgeschieden. Wird das Substrat nach dem Abscheiden der Schicht entfernt, wird das Substrat als verlorene Form bezeichnet.

Zur Abscheidung der Schicht oder der Herstellung des Körpers dient ein Beschichtungsstoff aus Mo, W, einer Mo-Basislegierung oder einer W-Basislegierung. Unter Mo-Basislegierung wird im Zusammenhang mit der Erfindung eine Legierung verstanden, die zumindest 50 At.% Mo enthält. Eine W-Basislegierung enthält zumindest 50 At.% W. Ein bevorzugter Mo bzw. W Gehalt ist > 80 At.%. Besonders vorteilhafte Mo bzw. W Gehalt sind > 90 At.%, >95 At.% oder 99 At.%. Im Weiteren eignet sich das Verfahren zur Herstellung einer Schicht oder eines Körpers aus einer Mo-W bzw. W-Mo Legierung. Unter diesen Legierungen sind Legierungen subsummiert, deren Summengehalt aus Mo und W > 80 At.%, bevorzugt > 90 At.%, besonders bevorzugt > 95 und > 99 At.% beträgt.

Der Beschichtungsstoff wird vor einer, in eine oder nach einer Konvergent-Divergent-Düse in ein Prozessgas injiziert, das einen Druck von über 10 bar, bevorzugt zumindest 20 bar und besonders bevorzugt zumindest 30 bar aufweist. Bevorzugt weist das Prozessgas einen Druck von über 10 bis 100 bar, insbesondere vorteilhaft von 20 bis 80 bar oder von 30 bis 60 bar auf. Die obere Grenze für den Druckbereich ergibt sich teilweise aus den derzeit verfügbaren Anlagen. Sollten zukünftig Anlagen verfügbar sein, die einen höheren Prozessgasdruck ermöglichen, verschiebt sich die Grenze zu höheren Drücken hin.

Der Beschichtungsstoff ist aus Partikeln gebildet. Eine Vielzahl von Partikeln wird als Pulver bezeichnet. Eine Vielzahl von Pulverpartikeln können durch Granulation in ein Pulvergranulat übergeführt werden. Die Größe der Pulverpartikel bzw. Pulvergranulatpartikel wird als Partikelgröße bezeichnet und wird üblicherweise mittels Laser-Diffraktometrie gemessen. Die Messergebnisse werden als Verteilungskurve angegeben. Der d₅₀-Wert gibt dabei die mittlere Partikelgröße an. d₅₀ bedeutet, dass 50 % der Partikel kleiner sind als der angegebene Wert.

Erfindungsgemäß liegen nun die Partikel zumindest teilweise als Aggregate und/oder Agglomerate vor; das heißt, die Partikel können zumindest teilweise als Aggregate, als Agglomerate oder als einer Mischung aus Aggregaten und Agglomeraten vorliegen. Unter Aggregat wird dabei in der Pulvermetallurgie ein Cluster von Primärpartikeln verstanden, die über eine starke Bindung miteinander verbunden sind, während bei einem Agglomerat ein Cluster von Primärpartikeln über eine schwache Bindung miteinander verbunden sind (siehe beispielsweise German, R.: "Introduction to Powder Metallurgy Science", MPIF, Princeton (1984), 32). Weisen die Primärpartikel eine sehr unterschiedliche Größe auf, werden die kleineren Partikel häufig auch als Sekundärpartikel bezeichnet. Als Aggregat wird im Folgenden ein Cluster bezeichnet, das sich nicht durch übliche Ultraschalldeagglomeration aufbrechen lässt, während Agglomerate zumindest teilweise in die Primärpartikel bzw. Primär- und Sekundärpartikel zerlegbar sind. Die Ultraschalldeagglomeration wird dabei mit 20 kHz und 600 W durchgeführt. In vorteilhafter Weise liegt der Beschichtungsstoff als Aggregat vor. Die Bindung zwischen den Primärpartikeln, bzw. Primär- und Sekundärpartikeln aus dem ein Aggregat aufgebaut ist, ist dabei stoffschlüssig (Metallurgical Bonding), bevorzugt ohne Mitwirken von anderen Elementen. In besonders vorteilhafter Weise liegen > 10 Ma.% oder > 20 Ma.%, insbesondere > 50 % aller Partikel als Aggregat oder Agglomerat vor. Die Auswertung erfolgt dabei folgendermaßen: Es werden 5 Proben entnommen, die mittels Rasterelektronenmikroskop untersucht werden. Bei einer Vergrößerung, die im Bildausschnitt 20 bis 50 Partikel umfasst, lässt sich in einfacher Weise die Summe der Partikel ermitteln, die als Aggregat oder Agglomerat vorliegen. Danach wird die Anzahl der als Aggregat oder Agglomerat vorliegenden Partikel auf die Gesamtzahl der ausgewerteten Partikel bezogen und der Mittelwert aus 5 Proben ermittelt.

Erfindungsgemäß weisen als Aggregate und/oder Agglomerate vorliegende Partikel eine Porosität von > 10 Vol.% auf. Die Auswertung erfolgt dabei durch eine rasterelektronenmikroskopische Untersuchung, in analoger Weise zu der bereits beschriebenen Bestimmung für die Anzahl, der als Aggregat oder Agglomerat vorliegenden Partikeln. Bevorzugte Bereiche für die Porosität P sind 10 Vol.% < P < 80 Vol.% oder 20 Vol.% < P < 70 Vol.%.

Die Bestimmung der mittleren Porosität folgt dabei folgender Arbeitsanweisung. Es werden zunächst Pulverschliffe angefertigt. Das Pulver wird hierzu in Epoxidharz eingebettet. Nach einer Aushärtezeit von 8 Stunden werden die Proben metallographisch präpariert, d.h. es kann später eine Untersuchung über den Pulverquerschliff hinweg erfolgen. Die Präparation umfasst die Schritte: Schleifen bei 150 bis 240 N mit festgebundenem SiC-Papier mit den Körnungen 800, 1000 und 1200; Polieren mit Diamant-Suspensionen mit 3 µm Körnung; finales Polieren mit einer OPS (Oxid-Polier-Suspension) der Körnung 0,04 µm; Reinigung der Proben im Ultraschallbad und Trocknung der Proben. Anschließend werden je Probe zehn Bilder von unterschiedlichen, repräsentativen Partikeln angefertigt. Dies geschieht mittels Rasterelektronenmikroskopie unter Verwendung eines 4-Quadranten-Ring-Detektors zur Detektion rückgestreuter Elektronen.

Die Anregungsspannung beträgt 20 kV, der Kippwinkel 0°. Die Aufnahmen werden scharf gestellt. Die Auflösung soll zumindest 1024x768 Pixel für eine korrekte Bildanalyse betragen. Der Kontrast wird derart gewählt, dass sich die Poren deutlich von der metallischen Matrix abheben. Die Vergrößerung für die Aufnahmen wird derart gewählt, dass jedes Bild ein Partikel enthält. Die quantitative Bildanalyse wird mit der Software Image Access durchgeführt. Es wird das Modul "Partikel Analyse" genutzt. Jede Bildanalyse folgt den Schritten: Einstellung eines Graustufenschwellwertes in der Art, dass offenes Porenvolumen in den Körnern erkannt wird; Festlegung des Messrahmens (maximal großer Kreis / Rechteck innerhalb eines Kornes -
Fläche 0,02 - 0,5 mm²); Detektionseinstellung: Messung nur in ROI, Einschließen des Bildrands, Abschneiden des ROI durch Objekt. Es werden weder bei der Aufnahme noch bei der Analyse der Aufnahmen Filterfunktionen verwendet. Da die Poren in einem Rückstreuelektronenbild dunkler erscheinen als die metallische Matrix werden bei der Detektionseinstellung die "dunklen Objekte" als Poren definiert. Nachdem die 10 Bilder einzeln analysiert worden sind, erfolgt eine statistische Auswertung über die Daten hinweg. Daraus wird der mittlere Flächenanteil der Poren (%) bestimmt, der der mittleren Porosität in Volumenprozent gleichgesetzt werden kann.

Bevorzugt handelt es sich dabei zumindest teilweise um offene Porosität. Unter offener Porosität versteht der Fachmann Hohlräume, die untereinander und mit der Umgebung in Verbindung stehen. In günstiger Weise ist der Volumenanteil von offenen Poren, bezogen zur Gesamtporosität > 30 %, in sehr günstiger Weise > 50 %, bevorzugt > 70 % und besonders bevorzugt > 90 Vol.%.

Erfindungsgemäß wird ein Beschichtungsstoff verwendet, der Partikel enthält, die zumindest teilweise als Aggregate und/oder Agglomerate vorliegen und die zumindest teilweise eine mittlere, mittels quantitativer Bildanalyse bestimmte Porosität von > 10 Vol.% aufweisen.

Die Pulverform (Aggregat und/oder Agglomerat) bzw. die Porosität der Partikel ermöglicht es nun, dichte und gut haftende Schichten bzw. aus Schichtlagen aufgebaute Körper herzustellen. Wie sich die Pulverform bzw. die Porosität auf die Schichtgüte auswirkt, ist noch nicht im Detail verstanden. Es ist jedoch davon auszugehen, dass ein Zusammenspiel mehrerer Mechanismen dabei eine Rolle spielt. Pulverform (Aggregat und/oder Agglomerat) und in analoger Weise Porosität bewirken folgende Eigenschaftsänderungen:
- Reduzierung der Fließspannung,
- Begünstigung mikroplastischer Fließvorgänge,
- geringere Verfestigung über Kaltverformung (geringere Versetzungswege zur nächstliegenden Oberfläche),
- verbesserte Partikelbreitung beim Aufprall,
- verbessertes mechanisches Verzahnen,
- bei vergleichbarer Partikelgröße geringere Masse und damit höhere Beschleunigung / Geschwindigkeit der Partikeln beim/nach dem Injizieren in den Gasstrom,
   und/oder
- geringerer Wärmeverlust im Vergleich zu Pulver mit vergleichbarer BET-Oberfläche.

Bei spröden Werkstoffen wurde bis dato die Partikelgröße des Beschichtungsstoffs sehr klein gehalten und/oder He als Prozessgas verwendet, weil nur so die für eine Haftung notwendige Geschwindigkeit erreicht werden konnte. Sehr feine Pulver fließen jedoch sehr schlecht und können zu einer Verstopfung der Pulverfördersysteme führen. Zudem kommt es bei der Verwendung von feinem Pulver zu einer Verschlechterung der Schichtqualität, da die Partikelbindung beim Aufprall auf dem Substrat bei Pulver mit sehr kleiner Partikelgröße schlechter als bei gröberem Pulver ist. Diese Größeneffekte beruhen auf dynamischen Effekten wie dem sehr schnellen Ausgleich der beim Aufprall lokal an den Grenzflächen gebildeten Wärme sowie auf einer höheren dynamischen Festigkeit des Werkstoffes durch Dehnratenverfestigung. Beides ist stärker ausgeprägt beim Aufprall kleiner Partikel. Mit dem erfindungsgemäßen Verfahren ist es nun möglich, auch bei Verwendung von einem kostengünstigen Prozessgas und von Pulver mit ausreichend gutem Fließverhalten eine Schicht oder einen Körper mit hoher Qualität zu erzielen.

Die erfindungsgemäßen Schichten können damit nicht nur mit dem Prozessgas Helium, das wie bereits erwähnt zu einer höheren Partikelgeschwindigkeit führt, sondern vorteilhaft auch mit Stickstoff als Prozessgas abgeschieden werden, wobei der Stickstoffgehalt vorteilhaft bei > 50 Vol.%, bevorzugt bei > 90 Vol.% liegt. Besonders bevorzugt kommt als Prozessgas Stickstoff ohne Beimengung anderer Gase zur Verwendung. Der Einsatz von Stickstoff-haltigem bzw. Stickstoff als Prozessgas ermöglicht eine wirtschaftliche Umsetzung der Erfindung.

Das Prozessgas wird bevorzugt vor der Konvergent-Divergent-Düse durch zumindest einen Heizer geleitet, der erfindungsgemäß zumindest bereichsweise eine Temperatur von > 800°C aufweist. Es wird im Zuge dieser Erfindung immer nur von der Heizertemperatur, nicht jedoch von der Gastemperatur gesprochen, da sich Erstere präzise messen lässt. Im Weiteren ist es günstig, wenn der Heizer eine Temperatur von > 900°C, insbesondere bevorzugt > 1.050°C aufweist. Dies führt zum einen zu Schichten mit noch besseren Eigenschaften - insbesondere mechanischen Eigenschaften - bzw. erlaubt auch die Anordnung des Heizers in etwas größerer Entfernung von der Spritzpistole. Besonders vorteilhafte weitere Bereiche sind > 1.100°C, > 1.200°C, > 1.300°C oder > 1.400°C. Im Weiteren liegt die Heizertemperatur vorteilhaft bei < 1.700°C, da es bei höheren Temperaturen zu ungünstigen Verklebungseffekten der einzelnen Pulverpartikel untereinander bzw. mit Komponenten der Kaltgasspritzanlage wie z.B. der Konvergent-Divergent-Düse kommt.

Im Weiteren ist es vorteilhaft, wenn die Partikel eine mittlere Nanohärte H_{IT} 0,005/30/1/30 von < 10 GPa aufweisen. Zur Ermittlung der Nanohärte wird ein Pulverschliff angefertigt und die Nanohärte auf der polierten Querschnittsfläche der Partikel ermittelt. Die Nanohärte H_{IT} 0,005/30/1/30 wird dabei nach EN ISO 14577-1 (Ausgabe 2002) mit einem Berkovich-Eindringkörper und dem Auswerteverfahren nach Oliver und Pharr bestimmt. Der Härtewert bezieht sich dabei auf ein Pulver oder Pulvergranulat, das vorzugsweise keiner zusätzlichen Nachbehandlung wie beispielsweise einer Glühung unterzogen wurde. Bevorzugt beträgt die Nanohärte bei Mo < 4,5 GPa oder < 3,5 GPa. Bei sehr hohen Anforderungen ist bei Mo eine Nanohärte H_{IT} 0,005/30/1/30 von < 3 GPa vorteilhaft. Bei Wolfram können folgende besonders vorteilhafte Werte angegeben werden: Nanohärte H_{IT} 0,005/30/1/30 < 9 GPa oder < 8 GPa.

Im Weiteren ist es vorteilhaft, wenn die Partikel eine Partikelgröße d₅₀ von > 5 µm und < 100 µm aufweisen. Der d₅₀ Wert wird dabei mittels Laserdiffraktometrie unter Anwendung der Norm (ISO 13320-2009) gemessen. Weitere vorteilhafte Bereiche sind 5 µm < d₅₀ < 80 µm oder 10 µm < d₅₀ < 50 µm. Werte im unteren Größenbereich können dabei ohne oder mit einem zusätzlichen Granulierschritt erzielt werden. Werte im oberen d₅₀ Bereich werden bevorzugt durch einen Granulierschritt erzielt. In vorteilhafter Weise liegt der Beschichtungsstoff damit als Granulat vor.

Des Weiteren ist es vorteilhaft, wenn der Beschichtungsstoff eine bi- oder multimodale Partikelverteilung aufweist. Eine bimodale Verteilung ist eine Häufigkeitsverteilung mit zwei Maxima. Eine multimodale Verteilung weist zumindest drei Maxima auf. Sowohl bei der bi- als auch bei der multimodalen Häufigkeitsverteilung ist dabei bevorzugt der Wert des Maximums im Bereich grober Partikel kleiner als zumindest ein Wert eines weiteren Häufigkeitsmaximums bei kleinerer Partikelgröße. Auch hier ist der Effekt nicht im Detail verstanden. Eine mögliche Erklärung liegt in der höheren Masse der groben Partikel. Die groben Partikel verbessern dabei die Haftung der zuvor abgeschieden feinen Partikel, ohne dass es dabei wesentlich ist, ob sich nun die groben Partikeln in die Schicht einbauen oder nicht.

Ein ähnlicher vorteilhafter Verdichtungseffekt kann erzielt werden, wenn der Beschichtungsstoff Hartstoffpartikel enthält, was eine weitere Ausführungsform darstellt. Unter Hartstoff werden dabei insbesondere Karbide, Nitride, Oxide, Silizide und Boride verstanden. Besonders günstige Effekte werden bei Verwendung von Karbiden, Nitriden, Oxiden, Siliziden und/oder Boriden auf Basis von Molybdän und/oder Wolfram erzielt. Der Anteil von Hartstoffpartikeln am Beschichtungsstoff beträgt dabei bevorzugt 0,01 bis 40 Ma.%, insbesondere bevorzugt 0,1 bis 30 Ma.% 0,1 bis 20 Ma.% oder 0,1 bis 10 Ma.%.

Auch die erfindungsgemäß hohe spezifische BET-Oberfläche der Partikel, von > 0,05 m²/g trägt zu einer hohen Qualität der Schicht bzw. des Körpers bei.
Die BET-Messung erfolgt dabei gemäß Norm (ISO 9277:1995, Messbereich: 0,01 - 300 m²/g; Gerät: Gemini II 2370, Ausheiztemperatur: 130°C, Ausheizzeit: 2 Stunden; Adsorptiv: Stickstoff, volumetrische Auswertung über Fünfpunktbestimmung). Weitere bevorzugte Ausführungsformen sind: BET Oberfläche > 0,06 m²/g, > 0,07 m²/g, > 0,08 m²/g, > 0,09 m²/g oder > 0,1 m²/g. Die Dicke der abgeschiedenen Schicht liegt bevorzugt bei > 10 µm. Insbesondere vorteilhaft liegt die Dicke bei > 50 µm, > 100 µm, > 150 µm oder > 300 µm. Die Schicht kann dabei aus einer Schichtlage oder bevorzugt aus einer Vielzahl von Schichtlagen aufgebaut sein.

Wie bereits erwähnt ist es auch möglich, über die Anordnung von vielen Schichtlagen übereinander einen bevorzugt selbsttragenden Körper herzustellen. Dabei können die Schichtlagen auf einer sogenannten verlorenen Form abgeschieden werden. Unter verlorener Form versteht man ein Substrat, das nach Abscheiden der Schicht bzw. eventuell auch nach einer anschließenden Glühung, um Spannungen in der Schicht abzubauen, wieder abgelöst wird. Das Ablösen kann durch einen thermischen Prozess erfolgen, wobei unter Ausnützung der unterschiedlichen Ausdehnungskoeffizienten eine Ablösung erreicht wird. Ein Entfernen der verlorenen Form kann jedoch auch durch einen chemischen oder mechanischen Prozess erfolgen. Damit ist es möglich, beispielsweise Formkörper in Rohr-, Topf-, Düsen- oder Plattenform herzustellen.

In vorteilhafter Weise kann dem Beschichtungsstoff vor und/oder beim Auftreffen auf dem Substratkörper oder der zuvor hergestellten Schichtlage thermische Energie zugeführt werden. Die thermische Energie wird dabei bevorzugt über elektromagnetische Wellen und/oder Induktion zugeführt. Beispielsweise kann ein Laserstrahl auf dem Auftreffpunkt der Partikel gerichtet sein, wodurch sich sowohl die Schichtstruktur als auch -haftung günstig beeinflussen lässt.

Der erfindungsgemäße Beschichtungsstoff lässt sich in einfacher Weise beispielsweise durch Granulieren einer oxidischen Verbindung und Reduktion dieser Verbindung herstellen, wie dies im Beispiel näher ausgeführt ist.

Das erfindungsgemäße Verfahren impliziert dabei, dass die Partikel beim Auftreffen auf dem Substrat zumindest teilweise bei einer Temperatur unter deren Schmelztemperatur verformt werden. Adiabatische Scherbänder können dabei Bereiche darstellen, wo begrenzt Temperaturen über dem jeweiligen Schmelzpunkt auftreten können. Als Teil der Schicht oder des Körpers werden die verformten Partikel als Körner bezeichnet. Die Körner sind dabei erfindungsgemäß zumindest teilweise kaltverformt. Unter Kaltverformung ist dabei die metallkundliche Definition zu verstehen, nämlich, dass die Partikel beim Auftreffen auf dem Substrat bei Bedingungen (Temperatur / Zeit) verformt werden, die zu keiner Rekristallisation führen. Da die Einwirkzeit von thermischer Energie beim erfinderischen Verfahren sehr kurz ist, ist die für eine Rekristallisation erforderliche Temperatur entsprechend der Arrheniusbeziehung hoch. Ein kaltverformtes Gefüge ist durch eine charakteristische Versetzungsstruktur charakterisiert, wie dies jedem Experten geläufig bzw. auch in Fachbüchern im Detail beschrieben ist. Die Versetzungsstruktur kann man beispielsweise durch eine TEM Untersuchung sichtbar machen.

Die kaltverformten Körner der Schicht / des Körpers sind in einer Richtung parallel zur Schicht- / Körperoberfläche (in lateraler Richtung) zumindest teilweise gestreckt, wobei das mittlere (Mittelwert aus zumindest 10 gestreckten Körnern) Streckungsverhältnis (grain aspect ratio = GAR; entspricht Länge dividiert durch Breite der Körner) > 1,3 ist. Insbesondere bevorzugt beträgt das mittlere Streckungsverhältnis > 2, > 3, > 4, > 5 oder > 10. Das Streckungsverhältnis wird metallographisch durch Bildanalyse bestimmt.

Durch die zumindest teilweise Kaltverformung wird erreicht, dass die verformten Körner vorteilhaft zumindest teilweise eine mittlere Nanohärte H_{IT} 0,005/30/1/30 von > 4,5 GPa aufweisen. Die mittlere Nanohärte H_{IT} 0,005/30/1/30 beträgt insbesondere bevorzugt > 5 GPa oder > 6 GPa. Bei W-Basis-Werkstoffen konnten auch Werte von > 7 GPa oder > 8 GPa erreicht werden. Die Messung der Nanohärte erfolgt dabei an einem Querschliff in analoger Weise wie in der Beschreibung für die Bestimmung der Pulverhärte bereits erläutert. Ein kleiner Anteil der Partikel erfährt beim Spritzvorgang keine oder nur eine geringe Verformung. Daraus resultiert ein Anteil von nicht oder nur gering verformten Körnern vorzugsweise von < 20 %, insbesondere < 10 % und < 5 %.

Besonders bevorzugt liegt ein aus vielen Schichtlagen bestehender Körper vor, insbesondere bevorzugt ein freitragender Körper. Das bevorzugte Volumen beträgt > 1 cm³, insbesondere bevorzugt > 5 cm³, > 25 cm³, > 50 cm³, > 100 cm³ oder > 500 cm³.

Im Weiteren weist die Schicht / der Körper bevorzugt eine Dichte (gemessen mit Auftriebsmethode) von > 90 %, insbesondere von > 95 %, > 98 % oder > 99 % auf. Der Sauerstoffgehalt der Schicht beträgt vorzugsweise < 0,3 Ma.%, insbesondere bevorzugt < 0,1 Ma.%, der Kohlenstoffgehalt < 0,1 Ma.%, insbesondere bevorzugt < 0,005 Ma.%.

Im Folgenden wird die Erfindung durch Beispiele beschrieben.
Figur 1 und Figur 2 zeigen rasterelektronenmikroskopische Aufnahmen von erfindungsgemäßen Mo-Partikeln mit einer Siebfraktion -45 / +20 µm.
Figur 3 und Figur 4 zeigen rasterelektronenmikroskopische Aufnahmen von erfindungsgemäßen Mo-Partikeln mit einer Siebfraktion -20 µm.
Figur 5 zeigt eine rasterelektronenmikroskopische Aufnahme von erfindungsgemäßen W-Partikeln mit einer Siebfraktion -45 / +20 µm.
Figur 6 zeigt eine rasterelektronenmikroskopische Aufnahme einer erfindungsgemäßen CGS Mo-Schicht.
Figur 7 zeigt eine rasterelektronenmikroskopische Aufnahme eines für Vergleichszwecke verwendeten kugeligen W-Pulvers.

### Beispiel 1

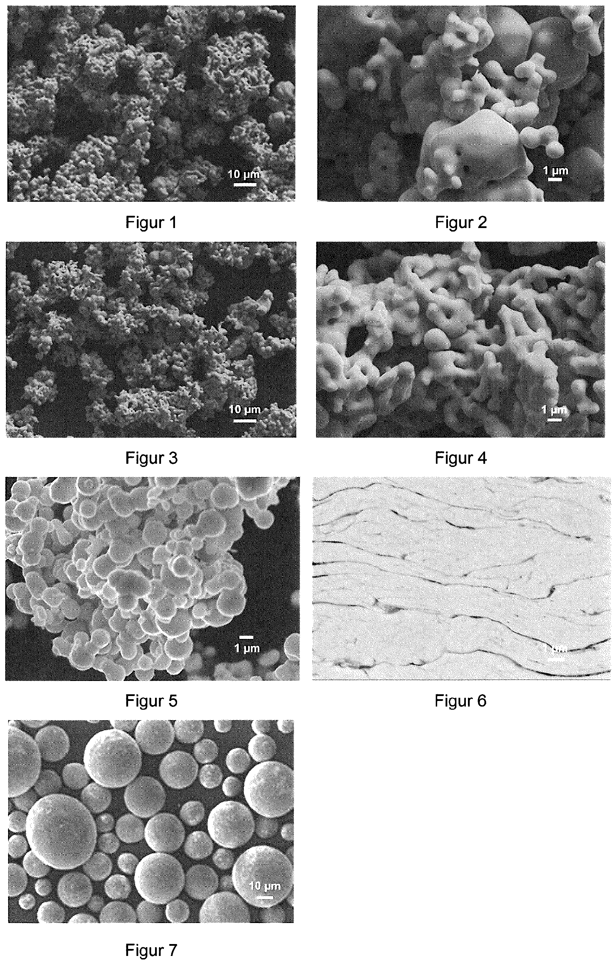

MoO₂-Pulver mit einer Korngröße gemessen nach Fisher (FSSS) von 3 µm wurde in einen Rührtank eingebracht und mit einer Menge Wasser vermengt, sodass ein Slurry mit einer Viskosität von ca. 3000 mPa·s entstand. Dieser Slurry wurde in einer Sprühgranulationsanlage zu einem Granulat versprüht. Dieses Granulat wurde unter Wasserstoff in einem Reduktionsschritt bei 1100°C zu Mo-Metallpulver reduziert. Das so hergestellte Mo-Pulver wurde bei 45 µm und 20 µm (Siebfraktionen -45 / +20 µm) und -20 µm abgesiebt. Die Siebfraktion -45 / +20 µm ist in den Figuren 1 und 2 wiedergeben, die Siebfraktion -20 µm in den Figuren 3 und 4. Die Figuren 1 bis 4 zeigen, dass die Partikel das typische Erscheinungsbild von Aggregaten oder Agglomeraten aufweisen. Es wurde nun versucht, das Pulver durch Einwirkung von Ultraschall (20 Hz, 600 W) zu deagglomerieren. Da dies jedoch nur zu einem geringen Teil möglich war, liegt das Pulver gemäß der in der Beschreibung angeführten Definition mehrheitlich als Aggregat vor. Die Bestimmung der Porosität wurde wie in der Beschreibung detailliert ausgeführt durch quantitative Bildanalyse durchgeführt. Es wurde dabei die Porosität von 10 Partikeln bestimmt, wobei der mittlere Porositätswert für die Siebfraktion -45 / +20 µm bei ca. 40 Vol.% und für die Siebfraktion -20 µm bei ca. 35 Vol.% lag. Die BET-Oberfläche wurde nach ISO 9277:1995 (Gerät: Gemini 2317 / Typ2, Entgasung bei 130°C / 2h in Vakuum, Adsorptiv: Stickstoff, volumetrische Auswertung über Fünfpunktbestimmung) bestimmt und betrug für die Siebfraktion -45 / +20 µm 0,16 m²/g und für die Siebfraktion -20 µm 0,19 m²/g. Die Partikelgrößen wurden durch Laserdiffraktometrie (gemäß ISO13320 (2009)) bestimmt. Die d₅₀ Werte sind in Tabelle 1 wiedergegeben. In weiterer Folge wurde ein Pulverschliff angefertigt und im Querschliff die mittlere (Mittelwert aus 10 Messungen) Nanohärte H_{IT} 0,005/30/1/30 (gemessen nach EN ISO 14577-1, Ausgabestand 2002, Berkovich-Eindringkörper und Auswerteverfahren nach Oliver und Pharr) bestimmt. Die mittleren Nanohärten sind ebenfalls in der Tabelle 1 zusammengefasst.

### Beispiel 2

Mo-1,2Ma.%HfC Metallpulver mit einer FSSS (Korngröße mittels Fisher Subsieve Sizer bestimmt) von 2 µm wurde durch Sprühgranulation zu einem Granulat verarbeitet, wobei die einzelnen Granulatpartikel nahezu ideale Kugelform aufwiesen. Als Binder wurde dazu Polyvinylamin verwendet, das in Wasser gelöst wurde. Der Binder wurde bei 1100°C in einer Wasserstoffatmosphäre thermisch entfernt. Die Glühung in Wasserstoff führte auch zu einer Sinterbrückenbildung durch Oberflächendiffusion, ohne dass allerdings Verdichtung durch Korngrenzendiffusion eintrat. Die Kugelform wurde durch die Glühung nicht verändert. Die Bestimmung der Porosität wurde wie in der Beschreibung detailliert ausgeführt durch quantitative Bildanalyse durchgeführt. Es wurde dabei die Porosität von 10 Granulatpartikeln bestimmt, wobei der mittlere Porositätswert bei ca. 57 Vol.% lag. Die Partikelgrößen wurden durch Laserdiffraktometrie (gemäß ISO13320 (2009)) bestimmt. Der d₅₀ Werte ist in Tabelle 1 wiedergegeben.

### Beispiel 3

Mo-30Ma.%W Metallpulver (im nicht vorlegierten Zustand) mit einer FSSS (Korngröße mittels Fisher Subsieve Sizer bestimmt) von 2,5 µm wurde analog zu Beispiel 2 zu einem Granulat verarbeitet und charakterisiert. Der Binder wurde bei 1100°C entfernt. Die mittlere Porositätswert betrug ca. 59 Vol.% lag. Der d₅₀ Werte ist in Tabelle 1 wiedergegeben.

### Beispiel 4

W-Blauoxid (WO₃₋ₓ) mit einer Partikelgröße nach Fisher (FSSS) von 7 µm wurde in einem einstufiger Reduktionsprozess unter Wasserstoff bei 850°C reduziert. Das so hergestellte W-Pulver wurde bei -45 / +20 µm abgesiebt. Figur 5 zeigt, dass die Partikel das typische Erscheinungsbild von Aggregaten oder Agglomeraten aufweisen. Es wurde versucht, das Pulver durch Einwirkung von Ultraschall (20 Hz, 600 W) zu deagglomerieren. Da dies jedoch nur zu einem geringen Teil möglich war, liegt das Pulver gemäß der in der Beschreibung angeführten Definition mehrheitlich als Aggregat vor. Die Bestimmung der Porosität wurde wie in der Beschreibung detailliert ausgeführt durch quantitative Bildanalyse durchgeführt. Es wurde dabei die Porosität von 10 Partikeln bestimmt, wobei der mittlere Porositätswert bei ca. 45 Vol.% lag. Die BET-Oberfläche wurde nach ISO 9277:1995 (Gerät: Gemini 2317 / Typ2, Entgasung bei 130°C / 2h in Vakuum, Adsorptiv: Stickstoff, volumetrische Auswertung über Fünfpunktbestimmung) bestimmt und betrug 0,14 m²/g. Die Partikelgrößen wurden durch Laserdiffraktometrie (gemäß ISO13320 (2009)) bestimmt. Der d₅₀ Wert ist in der Tabelle 1 wiedergegeben. In weiterer Folge wurde ein Pulverschliff angefertigt und im Querschliff die mittlere (Mittelwert aus 10 Messungen) Nanohärte H_{IT} 0,005/30/1/30 (gemessen nach EN ISO 14577-1, Ausgabestand 2002, Berkovich-Eindringkörper und Auswerteverfahren nach Oliver und Pharr) bestimmt. Diese ist ebenfalls in der Tabelle 1 wiedergegeben.

**Tabelle 1**

| | Mo-Pulver Siebfraktion -45 / +20 µm (gem. Beispiel 1) | Mo-Pulver Siebfraktion -20 µm (gem. Beispiel 1) | Mo-1,2Ma.%HfC / Mo-30Ma.%W Pulver (gem. Beispiele 2 bzw. 3) | W-Pulver Siebfraktion -45 / +20 µm (gem. Beispiel 4) |
|---|---|---|---|---|
| d₅₀ Partikelgröße (µm) | 13 | 11 | 26 / 22 | 14 |
| Nanohärte H_{IT} 0,005/30/1/30 (GPa) | 3,0 | 3,2 | - | 6,1 |

### Beispiel 5

Mo-Pulver mit den Siebfraktionen -45 / +20 µm und -20 µm gemäß Beispiel 1, Mo-1,2Ma.%HfC Granulat gemäß Beispiel 2, Mo-30Ma.%W Granulat gemäß Beispiel 3 und W-Pulver der Siebfraktion -20 µm gemäß Beispiel 4 wurden durch Kaltgasspritzen (CGS) verspritzt. Als Substrat wurde ein geschliffenes Rohr aus dem Stahl 1.4521 (X 2 CrMoTi 18-2) verwendet, wobei der Durchmesser 30 mm und die Länge 165 mm betrugen. Die Rohre wurden vor dem Beschichten mit Alkohol gereinigt, einseitig in eine rotationsfähige Aufnahme gespannt und am freien Ende beschichtet. Es wurde eine umfangseitige Schicht bei rotierendem Substrat hergestellt. Der Kaltgasspritzprozess wurde mit Stickstoff (86 m³/h) durchgeführt. Der Prozessgasdruck betrug 49 bar. Das Prozessgas wurde in einem Heizer, der eine Temperatur von 1100°C aufwies und in der Spritzpistole angeordnet war, erhitzt. Das Prozessgas / Pulver - Gemisch wurde durch eine Laval - Düse geführt und mit einem Spritzabstand von 40 mm senkrecht zur Substratoberfläche verspritzt. Der axiale Vorschub der Spritzpistole betrug 0,75 mm/s und die Drehzahl des Substrats 650 U/min. Die Pulverförderung erfolgte mit einer Lochscheibe aus einem Pulverbehälter, der unter einem Druck von 50 bar stand.

In weiteren Versuchen wurde die Temperatur des Heizers auf 700°C und 800°C abgesenkt, bzw. auf 1200°C erhöht.

Es konnten bei allen Temperaturen mit allen Pulvern Schichten abgeschieden werden. Bei 700°C sind allerdings vereinzelte Schichtfehler, wie beispielsweise Ablösungen zwischen einzelnen Körnern, zu beobachten, sodass sich diese Schichten nur für geringere Anforderungsbedingungen eignen. Bei 800, 1100 und 1200°C konnten dichte, gute haftende Schichten mit mittleren Schichtdicken von > 10 µm mit dem typischen Erscheinungsbild (siehe beispielsweise Figur 6 für Mo -45 µm / +20 µm / Heizertemperatur 1100°C) von CGS-Schichten hergestellt werden. Die abgeschiedenen Schichten wiesen kaltverformte Mo bzw. W Körner auf. Das mittlere Kornstreckungsverhältnis GAR (Kornlänge bezogen auf Kornbreite) wurde mittels quantitativer Metallographie ermittelt und betrug zwischen 2 und > 5. Die mittlere Nanohärte H_{IT} 0,005/30/1/30 betrug bei Mo (Pulver gemäß Beispiel 1) ca. 5 GPa und bei W (Pulver gemäß Beispiel 4) ca. 9 GPa. Bei der Heizertemperatur von 1200°C konnten mit allen Pulvern nicht nur Schichten mit einer Dicke von 150 µm und darüber hergestellt werden, sondern auch Formkörper mit einem Volumen von ca. 500 cm³.

Vergleichsweise wurde auch nicht erfindungsgemäßes kugeliges, dichtes W Pulver (siehe Figur 7) mit einer d₅₀ Partikelgröße von 28 µm bei 1100°C verspritzt. Hier gelang kein Schichtaufbau.

## Patentansprüche

1. Verfahren zur Herstellung einer Schicht auf einem Substratkörper oder eines aus Schichtlagen aufgebauten Körpers, wobei ein aus Partikeln gebildeter Beschichtungsstoff aus Mo, W, einer Mo-Basislegierung, einer W-Basislegierung oder einer Mo-W Legierung sowie ein Prozessgas, das einen Druck von > 10 bar aufweist, bereitgestellt werden, das Prozessgas in einer Konvergent-Divergent Düse beschleunigt und der Beschichtungsstoff vor der, in die oder nach der Konvergent-Divergent Düse in das Prozessgas injiziert wird und dass die Partikel zumindest teilweise als Aggregate und/oder Agglomerate vorliegen,
**dadurch gekennzeichnet,**
**dass** die Aggregate und/oder Agglomerate zumindest teilweise eine mittlere, mittels quantitativer Bildanalyse bestimmte Porosität von > 10 Vol.% aufweisen und dass die Aggregate und/oder Agglomerate eine mittels BET gemessene mittlere Oberfläche > 0,05 m²/g aufweisen.

2. Verfahren nach Anspruch 1, **dadurch gekennzeichnet, dass** die Aggregate und/oder Agglomerate zumindest teilweise eine mittlere Nanohärte H_{IT} 0,005/30/1/30 von ≤ 10 GPa aufweisen.

3. Verfahren nach Anspruch 1 oder 2, **dadurch gekennzeichnet, dass** der Beschichtungsstoff teilweise in Granulatform vorliegt.

4. Verfahren nach einem der vorangehenden Ansprüche, **dadurch gekennzeichnet, dass** der Beschichtungsstoff eine bi- oder multimodale Partikelgrößenverteilung aufweist.

5. Verfahren nach einem der vorangehenden Ansprüche, **dadurch gekennzeichnet, dass** das Prozessgas durch zumindest einen Heizer geleitet wird.

6. Verfahren nach Anspruch 5, **dadurch gekennzeichnet, dass** der Heizer zumindest bereichsweise eine Temperatur > 800°C aufweist.

7. Verfahren nach einem der vorangehenden Ansprüche, **dadurch gekennzeichnet, dass** das Prozessgas Stickstoff-haltig mit einem Stickstoffgehalt > 50 Vol.% ist.

8. Verfahren nach einem der vorangehenden Ansprüche, **dadurch gekennzeichnet, dass** dem Beschichtungsstoff vor und/oder beim Auftreffen auf dem Substratkörper oder der zuvor hergestellten Schichtlage thermische Energie zugeführt wird.

9. Verfahren nach Anspruch 8, **dadurch gekennzeichnet, dass** die thermische Energie über elektromagnetische Wellen und/oder Induktion zugeführt wird.

10. Verfahren nach einem der vorangehenden Ansprüche, **dadurch gekennzeichnet, dass** der Beschichtungsstoff beim Auftreffen auf einem Substratkörper eine haftende Schicht mit einer mittleren Schichtdicke von > 10 µm bildet.

11. Verfahren nach einem der vorangegangenen Ansprüche, **dadurch gekennzeichnet, dass** ein aus vielen Schichtlagen aufgebauter Körper hergestellt wird.

## Claims

1. A process for producing a layer on a substrate body or a body built up of layers, where a coating material which is formed by particles and is composed of Mo, W, an Mo-based alloy, a W-based alloy or an Mo-W alloy and also a process gas which has a pressure of > 10 bar are provided, the process gas is accelerated in a convergent-divergent nozzle and the coating material is injected into the process gas before, in or after the convergent-divergent nozzle, the particles are at least partly present as aggregates and/or agglomerates, **characterized in that** the aggregates and/or agglomerates at least partly have an average porosity determined by means of quantitative image analysis of > 10% by volume and **in that** the aggregates and/or agglomerates have an average surface area measured by means of BET of > 0.05 m²/g..

2. The process as claimed in claim 1, **characterized in that** the aggregates and/or agglomerates at least partly have an average
nanohardness H_{IT} 0.005/30/1/30 of ≤ 10 GPa.

3. The process as claimed in claim 1 or claim 2, **characterized in that** the coating material is partly present in granule form.

4. The process as claimed in any of the preceding claims, **characterized in that** the coating material has a bimodal or multimodal particle size distribution.

5. The process as claimed in any of the preceding claims, **characterized in that** the process gas is passed through at least one heater.

6. The process as claimed in claim 5, **characterized in that** the heater has, at least in regions, a temperature of > 800°C.

7. The process as claimed in any of the preceding claims, **characterized in that** the process gas is nitrogen-containing with a nitrogen content of > 50% by volume.

8. The process as claimed in any of the preceding claims, **characterized in that** thermal energy is introduced into the coating material before and/or during impingement on the substrate body or the previously produced layer.

9. The process as claimed in claim 8, **characterized in that** the thermal energy is introduced by means of electromagnetic waves and/or induction.

10. The process as claimed in any of the preceding claims, **characterized in that** the coating material forms an adhering layer having an average layer thickness of > 10 µm on impingement on a substrate body.

11. The process as claimed in any of the preceding claims, **characterized in that** a body made up of many layers is produced.

## Revendications

1. Procédé de fabrication d'une couche sur un corps substrat ou d'un corps formé par des couches superposées, selon lequel un matériau de revêtement formé par des particules en Mo, W, un alliage à base de Mo, un alliage à base de W ou un alliage Mo-W, ainsi qu'un gaz de procédé, qui présente une pression > 10 bar, sont préparés, le gaz de procédé est accéléré dans une buse convergente-divergente et le matériau de revêtement est injecté dans le gaz de procédé avant, dans ou après la buse convergente-divergente, et les particules se présentent au moins en partie sous la forme d'agrégats et/ou d'agglomérats,
**caractérisé en ce que**,
les agrégats et/ou les agglomérats présentent au moins en partie une porosité moyenne, déterminée par analyse d'images quantitative, > 10 % en volume et **en ce que** les agrégats et/ou les agglomérats présentent une surface moyenne mesurée selon BET > 0,05 m²/g.

2. Procédé selon la revendication 1, **caractérisé en ce que** les agrégats et/ou les agglomérats présentent au moins en partie une nanodureté moyenne H_{IT} 0,005/30/1/30 ≤ 10 GPa.

3. Procédé selon la revendication 1 ou 2, **caractérisé en ce que** le matériau de revêtement se présente en partie sous la forme de granulats.

4. Procédé selon l'une quelconque des revendications précédentes, **caractérisé en ce que** le matériau de revêtement présente une distribution des tailles de particules bi- ou multimodale.

5. Procédé selon l'une quelconque des revendications précédentes, **caractérisé en ce que** le gaz de procédé est acheminé au travers d'au moins un dispositif de chauffage.

6. Procédé selon la revendication 5, **caractérisé en ce que** le dispositif de chauffage présente au moins en zones une température > 800 °C.

7. Procédé selon l'une quelconque des revendications précédentes, **caractérisé en ce que** le gaz de procédé contient de l'azote avec une teneur en azote > 50 % en volume.

8. Procédé selon l'une quelconque des revendications précédentes, **caractérisé en ce que** de l'énergie thermique est introduite dans le matériau de revêtement avant et/ou lors de la rencontre avec le corps substrat ou la couche fabriquée auparavant.

9. Procédé selon la revendication 8, **caractérisé en ce que** l'énergie thermique est introduite par des ondes électromagnétiques et/ou par induction.

10. Procédé selon l'une quelconque des revendications précédentes, **caractérisé en ce que** le matériau de revêtement forme lors de la rencontre avec un corps substrat une couche adhésive d'une épaisseur de couche moyenne > 10 µm.

11. Procédé selon l'une quelconque des revendications précédentes, **caractérisé en ce qu'**un corps formé par plusieurs couches superposées est fabriqué.
